# DEMANDE DE BREVET EUROPEEN

(11) **EP 2 392 429 A1**
(43) Date de publication de la demande: **07.12.2011**
(21) Numéro de dépôt: 10164824.4
(22) Date de dépôt: 03.06.2010
(51) Int. Cl.: B23K 26/20, B23K 26/06, H01S 3/109

(54) **Procédé et installation d'usinage laser pulsé, en particulier pour le soudage, avec variation de l' apuissance de chaque impulsion laser**

(71) Demandeur: LASAG AG, 3602 Thun (CH)
(72) Inventeur: Dürr, Ulrich, 3608 Allmendingen (CH); Frei, Bruno, 3634 Thierachern (CH); Ruettimann, Christoph, 3600 Thun (CH)
(74) Mandataire: Surmely, Gérard

(57) **Abrégé**

Le procédé d'usinage laser comprend les étapes suivantes:
A) Génération au moyen d'une source laser d'un faisceau laser ayant une longueur d'onde initiale entre 700 et 1200 nanomètres et formé d'une succession d'impulsions laser (10);
B) Doublement de la fréquence d'une partie (12) du faisceau laser au moyen d'un cristal non linéaire;
C) Variation de la puissance de chaque impulsion laser (10) émise de manière que le profil de puissance sur la période de cette impulsion laser présente, dans une sous-période initiale (T1), un pic de puissance maximale ou une partie d'impulsion avec une puissance maximale et dans une sous-période intermédiaire (T2), de durée supérieure à la sous-période initiale (T1), une puissance inférieure à ladite puissance maximale sur toute cette sous-période intermédiaire.
La sous-période terminale (T3) des impulsions laser (10) est définie par une décroissance de la puissance vers zéro, laquelle dans un procédé de soudage est de préférence contrôlée pour optimiser le refroidissement de la soudure effectuée. Le procédé d'usinage concerne notamment le soudage de métaux hautement réfléchissant, notamment du cuivre, de l'or, de l'argent ou un alliage comprenant un de ces métaux.
L'invention concerne également une installation d'usinage laser pour la mise en oeuvre du procédé décrit ci-dessus.

## Description

### Domaine technique

La présente invention concerne le domaine de l'usinage laser et en particulier le soudage au laser de matériaux hautement réfléchissant, tels le cuivre, l'or, l'argent, l'aluminium ou un alliage comprenant un de ces métaux. Plus particulièrement, l'invention concerne un procédé d'usinage laser et une installation pour la mise en ouvre de ce procédé où la source de lumière cohérente génère un faisceau laser avec une longueur d'onde entre 700 et 1200 nanomètres, par exemple un laser Nd:YAG ou un laser à fibre. Un cristal non linéaire est prévu pour doubler partiellement la fréquence du faisceau laser de manière à augmenter l'efficacité d'usinage.

### Arrière-plan technologique

Il est connu du document de brevet US 5,083,007 une installation de soudage au laser comprenant une source laser Nd:YAG, pompée optiquement par une lampe à décharge (flash) et générant une lumière cohérente avec une longueur d'onde de 1064 nanomètres (nm), et un cristal non linéaire (par exemple LiNbO₃ ou KTP) agencé dans la cavité résonnante, ce cristal doublant partiellement la fréquence de la lumière générée par la source laser. A la sortie de la cavité résonnante, on a donc un faisceau laser formé de deux longueurs d'onde, à savoir 1064 nm (lumière infrarouge) et 532 nm (lumière verte). Ce document propose de produire un faisceau laser pulsé avec au moins 3% de lumière ayant une longueur d'onde entre 350 et 600 nm engendrée par un convertisseur de fréquence 2F. De préférence les impulsions laser ont au moins une énergie de 30 mJ avec au moins 3 mJ provenant de la lumière à double fréquence. La durée des impulsions est prévue entre 0,5 milliseconde (ms) et 5,0 ms.

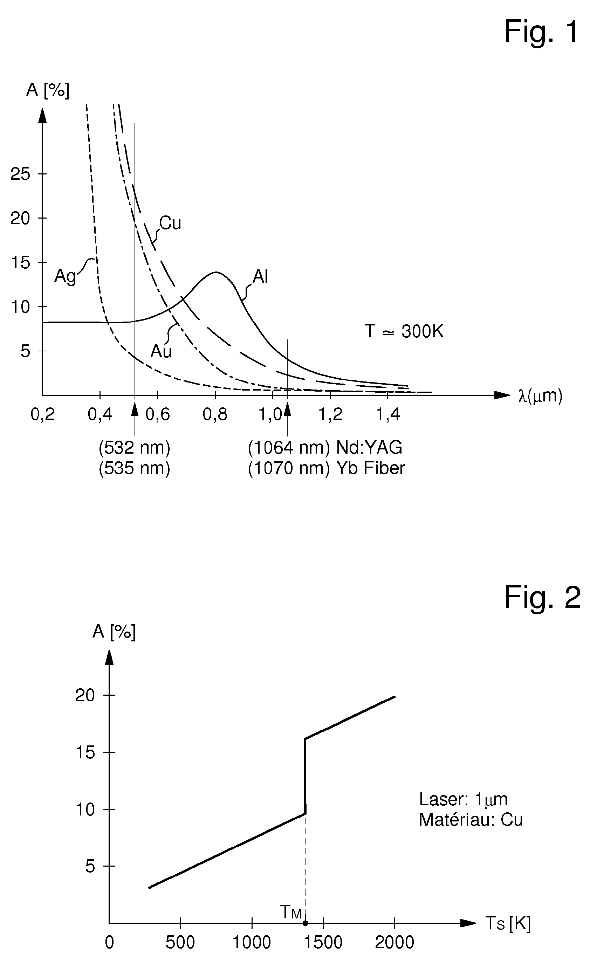

Le document US 5,083,007 divulgue essentiellement trois modes de réalisation pour l'installation de soudage laser. Dans le premier mode de réalisation (Figure 1), il est prévu de générer un faisceau laser de relativement faible puissance instantanée pour ne pas endommager le cristal non linéaire, de manière à obtenir avec le cristal agencé intra-cavité un pourcentage entre 5 % et 15% de lumière verte. Pour augmenter ce pourcentage de lumière verte, il est prévu optionnellement d'agencer un réflecteur infrarouge qui filtre une partie de la lumière infrarouge. Dans un deuxième mode de réalisation, il est prévu de sélectionner un miroir de sortie de la cavité résonante qui réfléchisse peu la lumière verte, ce qui permet d'augmenter la quantité de lumière verte dans les impulsions laser. On notera ici que le rapport entre lumière infrarouge et lumière verte est fixe. Dans le troisième mode de réalisation, pour pouvoir ajuster le rapport entre ces deux radiations dans le faisceau laser, il est prévu de séparer ces deux radiations puis de les atténuer indépendamment par des filtres. Ceci permet de varier le rapport entre les deux radiations en réduisant la puissance laser incidente sur le matériau pour une puissance émise donnée. On réduit donc l'efficacité du système laser. De plus, on remarquera que cette manière de procéder permet de varier le rapport entre lumière verte et lumière infrarouge entre deux opérations de soudage distinctes puisqu'il est nécessaire de changer au moins un filtre atténuateur pour modifier ce rapport.

Dans tous les modes de réalisation donnés dans le document US 5,083,007, il est prévu que les impulsions laser sont formées par commutation ON / OFF de la lampe flash. Il en résulte des impulsions comme représentées à la figure 2 de ce document, le profil de puissance présentant une augmentation exponentielle dès l'enclenchement des moyens de pompage (commutation ON) jusqu'à un niveau maximum conservé tant que les moyens de pompage reste actifs, c'est-à-dire sur tout le corps d'impulsion dont la durée est en relation avec la période de l'impulsion, puis la puissance descend de manière exponentielle dès que les moyens de pompage optique sont éteints (position OFF). On n'a donc aucune gestion ou contrôle du profil de puissance au cours de chaque impulsion. La puissance reste à son maximum sauf aux deux extrémités où le profil dépend seulement des caractéristiques physiques de la source laser et des moyens de pompage optique. Par conséquent, le rapport entre la lumière verte et la lumière infrarouge reste sensiblement constant sur la majeure partie de chaque impulsion. Ceci pose un problème en particulier pour les métaux hautement réfléchissant. En effet, le taux de conversion du cristal 2F augmente avec l'intensité du faisceau laser incident. Ainsi, pour augmenter le pourcentage de lumière verte qui est mieux absorbée à température sensiblement ambiante par les métaux hautement réfléchissant que la lumière infrarouge, il est nécessaire d'augmenter la puissance moyenne du laser pulsé décrit dans le brevet US 5,083,007.

Le dispositif laser proposé dans le document US 5,083,007 fournit des impulsions par modulation de la puissance de pompage optique entre un niveau bas (OFF) et un niveau haut (ON). Pour augmenter la puissance des impulsions générées par un tel laser, il faut augmenter la puissance des moyens de pompage. En augmentant ainsi la proportion de lumière verte et son énergie, on augmente également la quantité d'énergie infrarouge et dans tous les cas la quantité d'énergie globale par impulsion. On a observé que ceci pose un problème pour la qualité du soudage effectué car, si le couplage initial de la lumière verte dans la matière est meilleur, une fois que la température locale du matériau soudé augmente de manière significative, l'énergie infrarouge est aussi bien absorbée. Ceci conduit alors à une intensité d'énergie absorbée trop importante et à l'apparition d'effets thermiques secondaires néfastes, tels la formation de plasma et l'éjection de matière en fusion hors de la surface du matériau. Par contre, si on réduit la puissance du laser pulsé pour limiter la quantité de lumière infrarouge absorbée par impulsion, on diminue la proportion et la quantité d'énergie de lumière verte fournie et l'efficacité du soudage diminue. De plus, la reproductibilité d'un soudage donné devient très dépendante de l'état de surface du matériau soudé. Le contrôle de la qualité du soudage effectué devient complexe et difficile à assurer.

### Résumé de l'invention

A la Figure 1 est représenté approximativement le coefficient d'absorption sensiblement à température ambiante de quatre métaux hautement réfléchissant (Cuivre, or, argent et aluminium) en fonction de la longueur d'onde d'une lumière laser incidente sur chacun d'eux. On observe en particulier pour le cuivre (Cu), l'or (Au) et l'argent (Ag) un très faible taux d'absorption de la lumière pour la longueur d'onde de 1064 nm correspondant à la radiation générée par un laser Nd:YAG. Par contre, au double de la fréquence (c'est-à-dire à 532 nm), on observe que le taux d'absorption augmente grandement pour atteindre environ 20% (à température ambiante) jusqu'à environ 40% (dès que la température augmente) pour le cuivre et l'or. Ceci explique pourquoi le faisceau mixte proposé dans l'art antérieur susmentionné permet d'augmenter l'efficacité d'un soudage. On notera toutefois que les pourcentages donnés ici sont indicatifs car ils dépendent encore d'autres paramètres comme l'état de surface du métal.

Cependant, pour la lumière infrarouge, la situation représentée à la Figure 1 varie considérablement lorsque la température de la surface du métal augmente et un saut important intervient lorsque cette température atteint la température de fusion, comme ceci est représenté approximativement à la Figure 2 pour le cuivre. On observe que l'on passe, pour une lumière infrarouge incidente provenant d'un laser Nd:YAG (1 µm), d'un coefficient d'absorption inférieur à 5% à température ambiante à environ 10% en approchant de la température de fusion T_{M}. A cette température de fusion, ce coefficient devient supérieur à 15% et il continue d'augmenter ensuite avec une augmentation de la température du métal en fusion. Cette constatation donne une explication du problème observé dans l'art antérieur. En augmentant la puissance du dispositif laser pour avoir plus d'énergie couplée au métal dans la phase initiale du soudage, l'art antérieur augmente la puissance de lumière infrarouge sur la période de l'impulsion, laquelle est absorbée de plus en plus dès que la température de la surface du matériau augmente ; ce qui se produit de fait rapidement. L'efficacité initiale du soudage augmente, mais la quantité globale d'énergie finalement absorbée devient trop importante et engendre des problèmes secondaires néfastes à la qualité du soudage, notamment à l'état de surface après soudage.

La présente invention a pour objet de résoudre le problème mis en lumière ci-avant dans le cadre de la présente invention en équipant l'installation laser de moyens de commande agencés pour former des impulsions laser avec un profil de puissance sur la période de chaque impulsion laser présentant dans une sous-période initiale un pic de puissance maximale ou une partie d'impulsion avec une puissance maximale et dans une sous-période intermédiaire, de durée supérieure à la sous-période initiale et suivant directement cette dernière, une puissance inférieure à ladite puissance maximale sur toute cette sous-période intermédiaire. L'impulsion laser se termine par une sous-période terminale où la puissance diminue rapidement, de préférence de manière contrôlée pour optimiser le refroidissement d'une soudure. En particulier, la durée de la sous-période initiale est inférieure à deux millisecondes (2 ms). Dans une variante préférée, la puissance maximale a une valeur au moins deux fois plus élevée que la puissance moyenne sur la période de l'impulsion laser.

L'invention concerne donc une installation d'usinage laser telle que définie à la revendication 1 jointe à la présente description. Des caractéristiques particulières de cette installation et notamment de ses moyens de commande sont données aux revendications dépendantes de cette revendication 1. L'invention concerne aussi un procédé d'usinage laser telle que défini à la revendication 13 jointe à la présente description : Des caractéristiques particulières de ce procédé sont données aux revendications dépendantes de cette revendication 13.

Grâce aux caractéristiques de l'invention qui introduisent une gestion de la puissance lumineuse émise au cours de chaque impulsion laser et définissent un profil de puissance avec une relativement haute puissance dans une phase initiale de l'impulsion et une puissance réduite suite à cette phase initiale, on obtient une quantité significative de lumière à double fréquence dans la phase initiale et ensuite, lorsque l'absorption de la lumière à la fréquence initiale de la source laser a suffisamment augmentée suite à l'augmentation de la température de la surface du matériau usiné, la puissance de la lumière émise est diminuée de manière significative pour limiter la quantité d'énergie absorbée et de préférence contrôler temporellement au cours de la phase intermédiaire de l'impulsion laser la puissance lumineuse absorbée.

De fait, on obtient un double bénéfice du procédé d'usinage selon l'invention. En limitant la durée de haute puissance à la seule phase initiale, on contrôle différemment la puissance dans la phase initiale où la lumière à double fréquence est majoritairement absorbée et dans la phase intermédiaire durant laquelle le soudage proprement a lieu et où la lumière à la longueur d'onde initiale est bien absorbée. De plus, ceci permet de fournir une puissance relativement élevée dans la phase initiale pour augmenter le taux de conversion par le cristal non linéaire. En effet, ce taux de conversion augmente proportionnellement à l'intensité lumineuse incidente, ce qui a pour conséquence que la puissance lumineuse à double fréquence augmente proportionnellement au carré de la puissance incidente. Ainsi, il est avantageux pour obtenir un maximum de lumière à double fréquence dans la phase initiale de prévoir une puissance lumineuse relativement élevée dans cette phase initiale. Comme la puissance émise dans cette phase initiale ne définit pas la puissance émise dans la phase ultérieure, ceci ne pose plus de problème pour la qualité d'usinage. On peut donc prévoir dans cette phase initiale un pic de puissance relativement élevé qui engendre une amorce d'usinage rapide et efficace à la surface du matériau usiné. Ceci présente un autre avantage puisqu'il n'est pas nécessaire, comme dans l'art antérieur, d'incorporer le cristal non linéaire dans la cavité laser pour obtenir une certaine proportion de lumière à double fréquence. On peut donc prendre une source laser classique et agencer sur l'axe optique du faisceau laser sortant de la source laser une unité thermo-régulée comprenant le cristal non linéaire.

### Brève description des dessins

D'autres caractéristiques particulières de l'invention seront décrites ci-après en référence aux dessins annexés, donnés à titre d'exemples nullement limitatifs, dans lesquels :
- La Figure 1, déjà décrite, montre la dépendance de l'absorption lumineuse en fonction de la longueur d'onde pour divers métaux à la température ambiante ;
- La Figure 2, déjà décrite, montre la dépendance de l'absorption lumineuse du cuivre en fonction de la température de ce métal ;
- La Figure 3 montre schématiquement un profil de puissance d'une impulsion laser selon l'invention avec les composantes aux deux longueurs d'onde présentes suite au passage au travers d'un cristal non linéaire ;
- La Figure 4 représente un mode de mise en oeuvre préféré du procédé d'usinage laser selon l'invention ;
- La Figure 5 représente schématiquement un premier mode de réalisation d'une installation d'usinage laser selon l'invention ; et
- La Figure 6 représente schématiquement un deuxième mode de réalisation d'une installation d'usinage laser selon l'invention.

### Description détaillée de l'invention

Le procédé d'usinage laser selon l'invention comprend les étapes suivantes :
A) Génération au moyen d'une source laser d'un faisceau laser ayant une longueur d'onde entre 700 et 1200 nanomètres et formé d'une succession d'impulsions laser ;
B) Doublement de la fréquence d'une partie du faisceau laser au moyen d'un cristal non linéaire ;
C) Variation de la puissance de chaque impulsion laser émise de manière que le profil de puissance sur la période de cette impulsion laser présente, dans une sous-période initiale T1, un pic de puissance maximale ou une partie d'impulsion avec une puissance maximale et, dans une sous-période intermédiaire T2 de durée supérieure à la sous-période initiale et suivant directement cette dernière, une puissance inférieure à ladite puissance maximale sur toute cette sous-période intermédiaire.

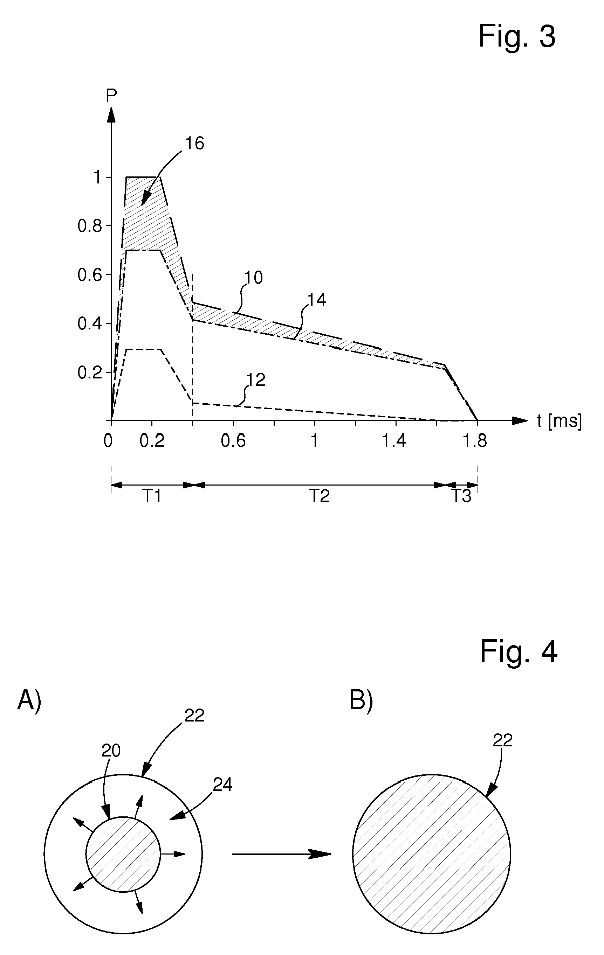

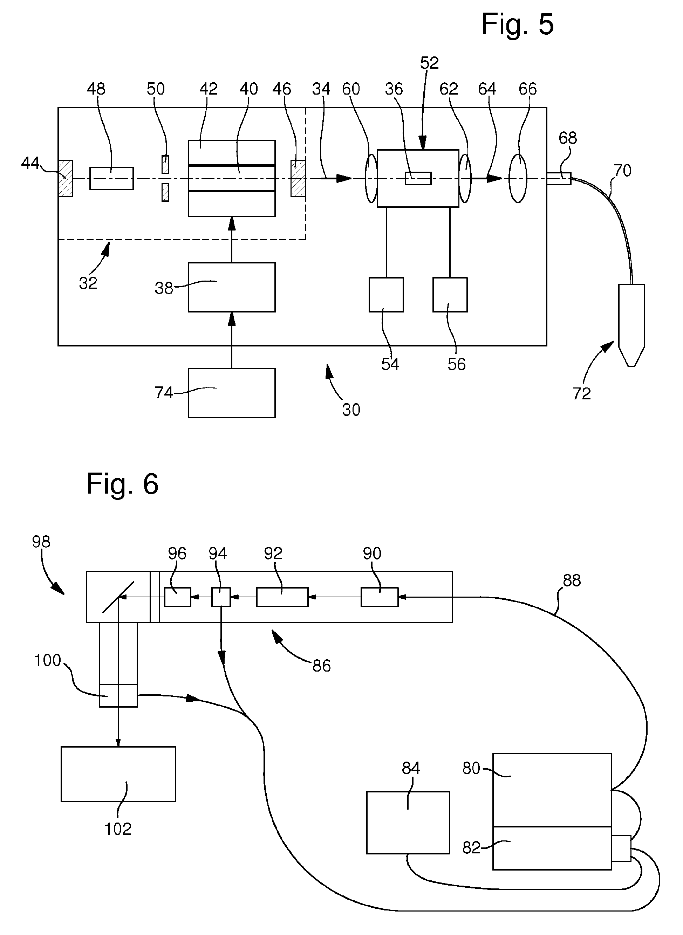

A la Figure 3 est représentée une variante du profil de puissance normalisée (échelle relative avec le maximum à 1) des impulsions laser selon la présente invention. La courbe 10 correspond à la puissance laser totale émise durant une impulsion. Après le passage au travers du cristal non linéaire prévu, une partie de la lumière à la fréquence initiale de la source laser est convertie en lumière à double fréquence. La courbe de puissance résultante pour cette lumière ou radiation à double fréquence est représentée schématiquement et approximativement par la courbe 12. La puissance de lumière initiale restante est donnée par la courbe 14. La surface hachurée 16 représente donc la partie de la lumière laser générée dont la fréquence a été doublée. On remarquera que la puissance lumineuse de la lumière à double fréquence est proportionnelle au carré (puissance mathématique 2) de la puissance lumineuse initiale. En effet, pour une puissance initiale normalisée de '1', on obtient une puissance lumineuse à double fréquence par exemple de 0,3 (30%) alors que lorsque la puissance initiale est diminuée par deux à 0,5 (50%), la puissance lumineuse à double fréquence est réduite par quatre à environ 0,075 (7,5%). On notera qu'un taux de conversion de 30% correspond pratiquement à un maximum pour un laser industriel avec une unité de doublement de la fréquence externe au résonateur (cas des Figures 5 et 6 qui seront décrites par la suite). De préférence, la source laser est commandée de manière à atteindre rapidement la puissance maximale prévue. On cherchera même dans une variante préférée d'augmenter la puissance au plus vite au début de l'impulsion laser, pour obtenir aussi vite que possible un maximum de lumière à fréquence double. De préférence, dans la sous-période initiale, la durée de montée à la puissance maximale est inférieure à 0,05 ms.

L'impulsion laser se termine par une sous-période terminale T3 de décroissance de la puissance vers zéro avec de préférence un contrôle de cette décroissance pour influencer le refroidissement d'une soudure effectuée et optimiser la métallurgie.

Pour bien comprendre le mécanisme physique obtenu par des impulsions laser avec un profil de puissance selon l'invention, on peut considérer une variante de la Figure 3 dans une application de soudage laser d'éléments en cuivre avec une lumière infrarouge (1064 ou 1070 nm). Dans la sous-période initiale T1 où la puissance est maximale, on peut considérer par exemple que 20% de lumière infrarouge est convertie en lumière verte (532 ou 535 nm). Il reste donc 80% de lumière infrarouge incidente sur la surface du métal. Cependant, 20-40% de l'énergie de la lumière verte est absorbée alors que seulement 5-10 % de l'énergie infrarouge est absorbée. On obtient donc un couplage de la lumière verte dans le métal correspondant à 4-8% de l'énergie totale, ce qui correspond également à la proportion de lumière infrarouge couplée au métal. Ainsi, dans la sous-période initiale, la lumière verte contribue autant que la lumière infrarouge à la fusion du métal alors que la conversion effectuée par le cristal non linéaire est de seulement 20%. On remarquera qu'au début de la sous-période initiale, alors que la température du métal n'a pas encore été élevée de manière significative par l'apport d'énergie, la quantité d'énergie à la fréquence initiale qui est absorbée par le métal est en général inférieure à celle à la fréquence double qui joue alors un rôle majeur. Une fois que la température du métal augmente suffisamment, le rapport entre les deux énergies couplées varie et la quantité d'énergie infrarouge absorbée devient prépondérante. Dès que la quantité d'énergie infrarouge absorbée augmente fortement, la puissance lumineuse est réduite ; ce qui définit la sous-période intermédiaire T2 de chaque impulsion laser selon l'invention.

Dans le cadre de l'invention, les impulsions laser sont obtenues soit par un laser pompé par une lampe flash, soit par un laser pompé par diodes fonctionnant dans une première variante dans un mode cw modulé et dans une seconde variante dans un mode qcw (de l'anglais 'quasi continuous wave'). Si le laser est par exemple un laser à corps solide du type Nd:YAG ou similaire, les moyens de pompage sont formés, dans une première variante, par une lampe flash et, dans une autre variante, par des diodes. Dans un mode préféré, il est prévu d'utiliser un laser à fibre pompé par diodes. Ce dernier permet d'obtenir un faisceau de meilleure qualité pouvant être mieux focalisé ; ce qui peut permettre d'augmenter le taux de conversion du cristal non linéaire. Dans la sous-période initiale T1, la puissance maximale peut varier notamment entre 50 W (Watt) et 20 kW. Ceci dépend notamment du diamètre prévu pour la tache laser au niveau de la surface du matériau usiné.

La période des impulsions laser n'est pas limitée, mais se situe généralement entre 0,1 ms et 100 ms (millisecondes). Dans une variante préférée, en particulier pour une application de soudage, la durée de la sous-période initiale T1 est inférieure à 2 ms. Une durée typique pour la sous-période intermédiaire T2 se situe dans la plage de 1 ms à 5 ms avec la condition selon l'invention que T2 soit supérieure à T1.

Dans un mode de mise en oeuvre préféré du procédé selon l'invention, la puissance maximale du profil temporel de l'impulsion laser a une valeur au moins deux fois plus élevée que la puissance moyenne sur la période de cette impulsion laser. Dans une variante particulière, la puissance maximale est supérieure à 200 W, Dans ce dernier cas, la source laser fonctionne dans un mode qcw ou pulsé par une lampe flash. Dans le mode cw modulé, la puissance maximale dans la phase T1 correspond à la puissance cw maximale et la puissance cw est ensuite réduite dans la phase suivante T2 (par exemple d'un facteur 1,5 ou plus).

Les applications envisagées pour le procédé de l'invention sont multiples, en particulier le soudage en continu ou par point de métaux, le découpage et le gravage de métaux et de matériaux durs comme la céramique, du CBN ou du PKD.

Dans un mode particulier, Il est prévu des moyens de focalisation du faisceau laser qui ne sont pas ou pas totalement compensés chromatiquement, de manière à obtenir au niveau du point focal une tache lumineuse pour la lumière à double fréquence qui présente un diamètre inférieur à celui de la tache lumineuse pour la lumière à la longueur d'onde initiale. Alors que l'homme du métier prendrait des moyens de focalisation compensés chromatiquement pour avoir une répartition homogène des deux radiations (fréquence initiale ou simple et fréquence double) au point focal (sensiblement zone d'impact du faisceau laser sur la matière usinée), il est prévu selon ce mode particulier de l'invention de tirer profit du fait que la divergence de la lumière à double fréquence est différente de celle de la lumière à la fréquence simple, environ d'un facteur deux. Ainsi, comme représenté à la Figure 4A, la tache de lumière formée par le faisceau incident sur le matériau usiné présente dans la zone centrale 20 un mixte des deux radiations alors que la zone annulaire 24 ne reçoit que la lumière à la fréquence simple dont la tâche lumineuse 22 présente un diamètre supérieur à celui de la tache lumineuse à double fréquence définissant la zone centrale 20. Ainsi, l'absorption d'énergie dans une phase initiale d'une impulsion laser se fait essentiellement dans la zone centrale 20 où l'usinage est amorcé de manière efficace puisque la lumière à double fréquence est concentrée dans cette zone centrale et que son intensité est donc bien supérieure à celle qui résulterait du cas où cette lumière à double fréquence couvrirait sensiblement l'entier de la tache lumineuse 22 avec une compensation chromatique. Ce mode particulier est spécialement intéressant dans une application de soudage d'éléments métalliques.

Par la suite de cette description du procédé selon l'invention, on considérera un soudage d'un métal hautement réfléchissant. En particulier, le métal soudé est du cuivre, de l'or, de l'argent, de l'aluminium ou un alliage contenant un de ces métaux.

Comme mentionné ci-avant, le mode particulier du procédé de l'invention décrit à l'aide de la Figure 4 s'applique efficacement à un soudage. La lumière à double fréquence est concentrée dans la zone centrale 20. Comme cette lumière est relativement bien absorbée par le métal, une certaine énergie est introduite dans ce métal dans la zone centrale et augmente localement sa température jusqu'à la température de fusion. A cet effet, l'intensité de lumière à double fréquence en combinaison avec la lumière à fréquence initiale dans le pic de puissance ou la partie d'impulsion avec une puissance maximale de chaque impulsion laser est supérieure au seuil de fusion pour cette combinaison de lumière et pour le matériau soudé. On notera que la fusion du métal dépend en premier lieu de l'intensité lumineuse, c'est-à-dire la densité de puissance, et aussi de la durée de cette intensité lumineuse. Ainsi, on comprend que la concentration de la lumière à double fréquence (lumière verte) dans le cas d'un laser à corps solide (par exemple Nd:YAG) ou d'un laser à fibre (par exemple dopée Yb) dans une zone centrale permet d'atteindre le seuil de fusion avec un laser de moindre puissance, non seulement à cause du doublement de la fréquence de la lumière infrarouge (pour les deux lasers donnés ici en exemple), mais également par le fait que cette lumière verte est concentrée dans une tache lumineuse environ quatre fois plus petite que la tache lumineuse obtenue pour la lumière infrarouge. On obtient donc une intensité lumineuse multipliée par quatre environ.

En se basant sur les caractéristiques d'absorption de la lumière par des métaux hautement réfléchissant données à la Figure 1, on comprend que l'énergie est absorbée initialement dans la zone centrale 20 où le métal commence après un certain délai à fondre (schématisée par le hachurage à la Figure 4A). L'énergie diffuse aussi en partie dans la région environnante, ce qui est représenté par les flèches à cette Figure 4A. La température augmente alors dans la zone annulaire 24 et finalement la lumière à fréquence simple (infrarouge) est également absorbée de manière significative sur toute la tache lumineuse 22, ce qui conduit à une fusion du métal dans la zone de sa surface définie par cette tache lumineuse 22, comme représenté à la Figure 4B. Le soudage est donc opéré depuis la zone centrale du faisceau laser incident sur la surface du métal à souder. On notera que, selon la durée de l'impulsion laser et l'intensité lumineuse de la lumière infrarouge dans la sous-période terminale T2, la zone finale dans laquelle le métal a fondu est plus ou moins étendue et plus grande que la tache lumineuse 22 puisque le métal est bon conducteur de chaleur.

On notera également que la puissance du laser peut être commandée et notamment variée dans la sous-période intermédiaire pour optimiser le soudage. En particulier, il est prévu de commander la puissance lumineuse pour maintenir sensiblement constante la température de la matière fondue dans la zone de soudage au moins dans une première partie de cette sous-période intermédiaire. Le profil de puissance dans la sous-période intermédiaire peut être contrôlé en temps réel via un capteur ou déterminé de manière empirique, notamment par des essais préliminaires. Diverses manières de procéder sont à disposition de l'homme du métier.

Dans une variante particulière, l'intensité de lumière à double fréquence dans la sous-période initiale T1 est prévue supérieure à 0,1 MW/cm² au point focal situé au niveau du soudage prévu. De préférence, la puissance maximale de l'impulsion lumineuse pour un laser donné est prévue au plus haut possible, tout en évitant cependant un perçage dans le cas d'une application de soudage.

Dans une variante optimisant la puissance du dispositif laser pour un soudage donné, l'intensité de lumière à la longueur d'onde initiale (lumière infrarouge) dans le pic de puissance ou la partie d'impulsion à puissance maximale est inférieure au seuil de fusion pour cette lumière à température ambiante pour le métal soudé. En particulier, il est prévu que l'intensité de lumière à la longueur d'onde initiale soit inférieure à 10 MW/cm² au point focal (par exemple environ 5 MW/cm²).

On décrira ci-après, de manière nullement limitative, deux modes de réalisation d'une installation laser selon l'invention.
A la Figure 5, l'installation d'usinage laser 30 comprend :
- une source de lumière cohérente 32 générant un faisceau laser 34 avec une longueur d'onde initiale entre 700 et 1200 nm;
- un cristal non linéaire 36 pour doubler partiellement la fréquence du faisceau laser ;
- des moyens de commande 38 de ladite source de lumière agencés pour engendrer des impulsions laser ;

Cette installation est caractérisé par le fait que les moyens de commande 38 sont agencés pour former des impulsions laser avec un profil de puissance sur la période de chaque impulsion laser présentant, dans une sous-période initiale, un pic de puissance maximale ou une partie d'impulsion avec une puissance maximale et, dans une sous-période intermédiaire de durée supérieure à la sous-période initiale et suivant directement cette dernière, une puissance inférieure à ladite puissance maximale sur toute cette sous-période intermédiaire (voir Figure 3 décrite précédemment).

La source de lumière cohérente (source laser) est formée d'un milieu actif 40 pompés optiquement par des moyens de pompage 42. Dans une première variante ces moyens de pompage sont formés par une ou plusieurs lampe(s) flash. Dans une seconde variante, les moyens de pompage sont formés par une pluralité de diodes. La source laser comprend une cavité résonnante formées par un miroir 44 totalement réfléchissant et un miroir de sortie 46 qui est semi-réfléchissant à la longueur d'onde émise sélectionnée (notamment 1064 nm pour un Nd:YAG). Il est également prévu un polarisateur 48 et un diaphragme 50 dans la cavité résonnante.

Le cristal non linéaire 36 est sélectionné pour doubler efficacement la fréquence du faisceau laser 34. Ce cristal est agencé dans un boîtier 52 étanche à la poussière. Ce boîtier est de préférence thermo-régulé, notamment à l'aide d'un module Peltier 54, et on effectue un certain vide d'air dans ce boîtier au moyen d'une pompe 56. A l'entrée du boîtier est prévue une optique de focalisation 60 pour augmenter l'intensité lumineuse au niveau du cristal doubleur de fréquence 36 puisque son efficacité est dépendant de l'intensité lumineuse incidente. Une optique 62, transparente pour 532 nm et 1064 nm, est également prévue pour collimater le faisceau laser 64 comprenant un mixte de deux radiations à la fréquence initiale (fréquence simple) et à la fréquence double. Ce faisceau 64 est ensuite introduit dans une fibre optique 70 au moyen d'une optique de focalisation 66 et d'un connecteur 68. La fibre optique 70 conduit le faisceau de lumière 64 jusqu'à une tête d'usinage 72.

Les moyens de commande 38 agissent sur les moyens de pompage 42. Ils sont associés à l'alimentation électrique de ces moyens de pompage et peuvent former ensemble une seule unité fonctionnelle ou un même module. Ces moyens de commande sont reliés à une unité de commande 74 agencée pour permettre à un utilisateur d'introduire certaines valeurs sélectionnées pour des paramètres ajustables de manière à définir le profil de puissance des impulsions laser engendrées par la source laser 32, de manière à mettre en oeuvre le procédé d'usinage laser selon la présente invention décrit précédemment. L'unité de commande 74 peut être assemblée à l'installation laser ou former une unité externe, tel un ordinateur. En particulier, les moyens de commande 38 sont agencés pour permettre de former des impulsions laser avec une première sous-période initiale dans laquelle intervient la puissance maximale de l'impulsion et suivie par une sous-période intermédiaire d'une durée supérieure et par une sous-période terminale de décroissance vers zéro de la puissance émise. La durée de la sous-période initiale est dans une variante préférée inférieure à deux millisecondes (2 ms). Dans une autre variante préférée, la puissance maximale a une valeur au moins deux fois plus élevée que la puissance moyenne sur la période de l'impulsion laser.

Dans un premier mode de réalisation, la source laser est agencée pour fonctionner dans un mode qcw (pompage à diodes spécifiques), de manière à obtenir un pic de puissance relativement élevé dans la sous-période initiale, bien au-dessus de la puissance moyenne du laser, et des impulsions relativement longues. Dans un deuxième mode de réalisation, la source laser fonctionne dans un mode cw modulé avec un pompage par diodes. Dans un troisième mode de réalisation, la source laser est pompée par lampe flash, c'est-à-dire fonctionne en mode pulsé.

Selon un mode de réalisation particulier, notamment pour une application de soudage, l'installation d'usinage laser comprend, en aval du cristal non linéaire 36, des éléments optiques de focalisation du faisceau laser qui ne sont pas ou pas totalement compensés chromatiquement, de manière à obtenir au niveau du point focal une tache lumineuse pour la lumière à double fréquence qui présente un diamètre inférieur à celui de la tache lumineuse pour la lumière à la longueur d'onde initiale (voir Figure 4A décrite précédemment).

L'installation 30 forme avantageusement une installation de soudage de métaux hautement réfléchissant, par exemple du cuivre ou de l'or. Dans une telle application, cette installation 30 est agencée pour obtenir une intensité de lumière à double fréquence supérieure à 0,1 MW/cm² au point focal. De manière à limiter la puissance de la source laser, il est prévu dans une variante que l'intensité lumineuse à la longueur d'onde initiale est inférieure à 10 MW/cm² au point focal.

On remarquera que dans un autre mode de réalisation non représenté dans les figures, le cristal non linéaire peut être incorporé dans la cavité raisonnante de la source laser. Toutefois, cet agencement n'est pas préféré car il nécessite la construction de source laser spécifique à la présente invention, alors que le montage du cristal non linéaire hors cavité raisonnante, à la suite de la source laser, permet de prendre une source laser standard et disponible sur le marché. Ceci est un avantage économique important.

A la Figure 6 est représenté schématiquement un deuxième mode de réalisation d'une installation laser selon l'invention. Premièrement, la lumière cohérente est générée par un laser à fibre 80 pompé optiquement par diodes. De préférence, il fonctionne en mode qcw. Ce laser 80 est associé à des moyens de commande 82 agencés pour former des impulsions laser selon la présente invention (voir Figure 3 décrite précédemment). Ces moyens de commande définissent des moyens de formation d'impulsions laser présentant un profil de puissance spécifique. Ils sont reliés à une unité de commande 84 ayant une interface utilisateur. Les impulsions laser à la fréquence initiale sont envoyées via un câble optique 88 à une unité de traitement 86 du faisceau laser formé de ces impulsions, laquelle est assemblée directement avec la tête d'usinage 98. Cette unité de traitement 86 comprend un collimateur 90 pour sensiblement collimater le faisceau laser ou le focaliser sur le cristal non linéaire incorporé dans l'unité 92 de doublement de la fréquence d'une partie de la lumière laser initiale. Cette unité 92 peut comprendre une optique spécifique pour optimiser l'efficacité de la conversion en lumière à double fréquence (lumière verte dans le cas d'un laser à fibre dopée Yb, lequel émet une lumière laser avec une longueur d'onde de 1070 nm).

Dans une variante, il est prévu, en aval de l'unité doubleur de fréquence, un capteur de mesure 94 des puissances respectives pour la lumière à la fréquence initiale et/ou pour la lumière à fréquence double. Ensuite, de manière optionnelle, il est prévu un dispositif zoom pour agrandir la section transversale du faisceau avant que celui-ci ne pénètre dans la tête d'usinage 98. Cette tête d'usinage est équipée d'un ou plusieurs capteurs 100, par exemple pour mesurer la température de la surface du matériau usiné 102 dans la zone d'impact du faisceau laser ou pour mesurer la lumière réfléchie par cette surface. Les capteurs 94 et 100 sont reliés aux moyens de commande 82 pour permettre de varier le profil de puissance des impulsions laser en temps réel en fonction des mesures effectuées.

## Revendications

1. Procédé d'usinage laser comprenant les étapes suivantes :
A) Génération au moyen d'une source laser (30 ;80,82) d'un faisceau laser ayant une longueur d'onde initiale entre 700 nm et 1200 nm et formé d'une succession d'impulsions laser (10) ;
B) Doublement de la fréquence d'une partie (12) dudit faisceau laser au moyen d'un cristal non linéaire ;
**caractérisé par** une étape de
C) Variation de la puissance de chaque impulsion laser émise de manière que le profil de puissance sur la période de cette impulsion laser présente, dans une sous-période initiale (T1), un pic de puissance maximale ou une partie d'impulsion avec une puissance maximale et, dans une sous-période intermédiaire (T2) de durée supérieure à la sous-période initiale et suivant directement cette dernière, une puissance inférieure à ladite puissance maximale sur toute cette sous-période intermédiaire.

2. Procédé d'usinage laser selon la revendication 1, **caractérisé en ce que** la durée de ladite sous-période initiale (T1) est inférieure à 2 ms.

3. Procédé d'usinage laser selon la revendication 2 ou 3, **caractérisé en ce que** ladite puissance maximale a une valeur au moins deux fois plus élevée que la puissance moyenne sur la période de l'impulsion laser.

4. Procédé d'usinage laser selon l'une des revendications précédentes, **caractérisé en ce que** ladite puissance maximale est supérieure à 200 W, ladite source laser fonctionnant dans un mode qcw.

5. Procédé d'usinage laser selon l'une des revendications précédentes, **caractérisé en ce qu'**il est prévu des moyens de focalisation dudit faisceau laser qui ne sont pas ou pas totalement compensés chromatiquement, de manière à obtenir au niveau du point focal une tache lumineuse (20) pour la lumière à double fréquence qui présente un diamètre inférieur à celui de la tache lumineuse (22) pour la lumière à la longueur d'onde initiale.

6. Procédé d'usinage laser selon l'une des revendications précédentes, **caractérisé en ce que** ce procédé consiste en un soudage d'un métal hautement réfléchissant.

7. Procédé d'usinage laser selon la revendication 6, **caractérisé en ce que** l'intensité de lumière à double fréquence en combinaison avec la lumière à fréquence initiale dans le pic de puissance ou la partie d'impulsion avec la puissance maximale est supérieure au seuil de fusion, dans la sous-période initiale, pour cette combinaison de lumière et pour le matériau soudé.

8. Procédé d'usinage laser selon la revendication 7, **caractérisé en ce que** ladite intensité de lumière à double fréquence est supérieure à 0,1 MW/cm² au point focal.

9. Procédé d'usinage laser selon la revendication 7 ou 8, **caractérisé en ce que** l'intensité de lumière à la longueur d'onde initiale dans le pic de puissance ou la partie d'impulsion avec la puissance maximale est inférieure, dans la sous-période initiale, au seuil de fusion pour cette lumière et pour le métal soudé.

10. Procédé d'usinage laser selon la revendication 9, **caractérisé en ce que** ladite intensité de lumière à la longueur d'onde initiale est inférieure à 10 MW/cm2 au point focal.

11. Procédé d'usinage laser selon l'une des revendications 6 à 10, **caractérisé en ce que** ledit métal soudé est du cuivre, de l'or, de l'argent, de l'aluminium ou un alliage contenant un de ces métaux.

12. Procédé d'usinage laser selon l'une des revendications 6 à 11, **caractérisé en ce que** lesdites impulsions laser présentent une sous-période terminale (T3) dans laquelle la puissance décroît vers zéro de manière à optimiser le refroidissement de la soudure effectuée.

13. Installation d'usinage laser comprenant :
- une source de lumière cohérente (32;80) générant un faisceau laser (34) avec une longueur d'onde initiale entre 700 nm et 1200 nm ;
- un cristal non linéaire (36;92) pour doubler partiellement la fréquence dudit faisceau laser ;
- des moyens de commande (38;82) de ladite source de lumière agencés pour engendrer des impulsions laser (10) ;
**caractérisé en ce que** lesdits moyens de commande sont agencés pour former lesdites impulsions laser avec un profil de puissance sur la période de chaque impulsion laser présentant, dans une sous-période initiale (T1), un pic de puissance maximale ou une partie d'impulsion avec une puissance maximale et, dans une sous-période intermédiaire (T2) de durée supérieure à la sous-période initiale et suivant directement cette dernière, une puissance inférieure à ladite puissance maximale sur toute cette sous-période intermédiaire.

14. installation d'usinage laser selon la revendication 13, **caractérisée en ce que** ladite source de lumière cohérente est pompée par diodes et fonctionne dans un mode qcw.

15. installation d'usinage laser selon la revendication 13 ou 14, **caractérisée en ce que** ladite source de lumière cohérente est formée par un laser à fibre (80).

16. Installation d'usinage laser selon l'une des revendications 13 à 15, **caractérisée en ce que** la durée de ladite sous-période initiale (T1) est inférieure à deux millisecondes (2 ms).

17. Installation d'usinage laser selon l'une des revendications 13 à 16, **caractérisé en ce que** ladite puissance maximale a une valeur au moins deux fois plus élevée que la puissance moyenne sur la période de l'impulsion laser.

18. Installation d'usinage laser selon l'une des revendications 13 à 17, **caractérisée en ce qu'**elle comprend des éléments optiques de focalisation dudit faisceau laser qui ne sont pas ou pas totalement compensés chromatiquement, de manière à obtenir au niveau du point focal une tache lumineuse (20) pour la lumière à double fréquence qui présente un diamètre inférieur à celui de la tache lumineuse (22) pour la lumière à la longueur d'onde initiale.

19. Installation d'usinage laser selon l'une des revendications 13 à 18, **caractérisée en ce qu'**elle définit une installation de soudage de métaux hautement réfléchissant.

20. Installation d'usinage laser selon la revendication 19, **caractérisée en ce que** l'intensité de lumière à double fréquence est supérieure à 0,1 MW/cm² au point focal.

21. Installation d'usinage laser selon la revendication 19 ou 20, **caractérisée en ce que** l'intensité de lumière à la longueur d'onde initiale est inférieure à 10 MW/cm² au point focal.

22. Installation d'usinage laser selon l'une des revendications 19 à 21, **caractérisée en ce que** lesdits moyens de commande sont agencés pour former lesdites impulsions laser avec un profil de puissance présentant une sous-période terminale (T3) durant laquelle la puissance décroît vers zéro de manière à assurer un refroidissement optimal de la soudure effectuée.
